(19) Europäisches Patentamt
European Patent Office
Office européen des brevets

(11) **EP 2 578 641 B1**

(12) **EUROPEAN PATENT SPECIFICATION**

(45) Date of publication and mention
of the grant of the patent:
**01.03.2017 Bulletin 2017/09**

(21) Application number: **11786929.7**

(22) Date of filing: **26.05.2011**

(51) Int Cl.:
**C08L 101/00** *(2006.01)*    **C08L 25/06** *(2006.01)*
**C08L 33/04** *(2006.01)*    **B29B 9/10** *(2006.01)*
**C08J 5/00** *(2006.01)*

(86) International application number:
**PCT/KR2011/003885**

(87) International publication number:
**WO 2011/149297 (01.12.2011 Gazette 2011/48)**

(54) **RESIN MIXTURE FOR MELT PROCESSING, and PELLET**

HARZMISCHUNG ZUR SCHMELZVERARBEITUNG und PELLET

MÉLANGE DE RÉSINES DESTINÉ À ÊTRE TRANSFORMÉ À L'ÉTAT FONDU et PASTILLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.04.2011 KR 20110033146
20.08.2010 KR 20100081084
28.05.2010 KR 20100050639**

(43) Date of publication of application:
**10.04.2013 Bulletin 2013/15**

(73) Proprietor: **LG Chem, Ltd.
Youngdungpo-gu
Seoul 150-721 (KR)**

(72) Inventors:
• **RYU, Jin Young**
  **Daejeon 302-120 (KR)**
• **YOO, Houng Sik**
  **Seoul 143-831 (KR)**
• **KIM, Hak Shin**
  **Daejeon 305-738 (KR)**
• **HONG, Young Jun**
  **Daejeon 305-380 (KR)**
• **SHIN, Chong Kyu**
  **Daejeon 305-358 (KR)**
• **CHOI, Eun Joo**
  **Daejeon 305-509 (KR)**

(74) Representative: **Goddar, Heinz J.
Boehmert & Boehmert
Anwaltspartnerschaft mbB
Patentanwälte Rechtsanwälte
Pettenkoferstrasse 20-22
80336 München (DE)**

(56) References cited:
**WO-A1-2007/129835    FR-A1- 2 374 361
JP-A- 2000 239 532    JP-A- 2004 204 122**

• **MING WEI ET AL.: 'Core-Sheath Structure in
Electrospun Nanofibers from Polymer Blends'
MACROMOLECULAR MATERIALS AND
ENGINEERING vol. 291, no. ISSUE, 09 November
2006, pages 1307 - 1314**
• **KEESTRA, BJ ET AL.: 'Two component injection
molding of phase separating blends'
INTERNATIONAL POLYMER PROCESSING vol.
21, no. 2, 2006, pages 168 - 174**
• **N. ZHAO ET AL.: 'A Novel Ultra-hydrophobic
Surface: Statically Non-wetting but Dynamically
Non-sliding' ADVANCED FUNCTIONAL
MATERIALS vol. 17, October 2007, pages 2739 -
2745**
• **MATTHIAS SCHNELL ET AL.: 'Evolution of
viscosities and morphology for the two-phase
system polyethylene oxide/poly
(dimethylsiloxane)' CHEMISTRY AND
MATERIALS SCIENCE, RHEOLOGICA ACTA vol.
47, no. 4, 2008, pages 469 - 476**

**Description**

CROSS-REFERENCE TO RELATED APPLICATION

This application claims priority to and the benefit of Korean Patent Application No. 2010-0050639, filed May 28, 2010, Korean Patent Application No. 2010-0081084, filed August 20, 2010, and Korean Patent Application No. 2011-0033146, filed April 11, 2011.

TECHNICAL FIELD

The present invention relates to a resin blend for a melting process and a method of preparing a resin article using the same, and more particularly, to a resin blend for a melting process which can improve mechanical and surface characteristics of a resin article and increase manufacturing efficiency, for example, reduction of a processing time, an increase in productivity and reduction of a manufacturing cost without using additional surface coating, and a method of preparing a resin article using the same.

BACKGROUND

Resins are used for various applications such as a part of an automobile, a helmet, a part of an electric device, a part of a spinning machine, a toy or a pipe due to their excellent processability and properties such as tensile strength, modulus of elasticity, heat resistance and impact resistance.

Particularly, resins for home interior accessories, parts of automobiles and toys are required to be environment-friendly and have excellent scratch resistance because they are in direct contact with the human body. However, resins are generally decomposed by oxygen in the air, ozone and light and easily changed in color when exposed to an external environment over a certain period of time. Thus, the resins become very weak in weather resistance and strength, and are easily breakable. For this reason, it is common to use a method of compensating for shortcomings of resins and improving a surface characteristic by applying an additional coating or plating process. However, such a coating or plating process can degrade efficiency and economic feasibility of a manufacturing process of resins or generate toxic materials during the process or disposal of a resin product.

Accordingly, various methods have been suggested to improve characteristics such as scratch resistance, heat resistance and whether resistance of a plastic resin without using the coating or plating process. For example, a method of adding an inorganic particle to resins has been suggested to improve physical properties such as wear resistance and hardness of resins. However, the method may deteriorate the processability of a resin and impact strength and brilliance characteristics. While a method of further adding a resin having excellent scratch resistance or heat resistance to improve a surface characteristic of a plastic resin has also been suggested, according to this method, an additional process such as a curing process after injection of a product is needed, and the physical properties such as whether resistance, heat resistance and scratch resistance may not be improved to the extent required for the product.

JP 2004-204122 A discloses a light-diffusing resin composition using a combination of at least two kinds of transparent resins and a molding which is obtained by molding the composition. The light-diffusing resin composition uses a combination of at least two kinds of transparent resins having a difference in a refractive index and a difference in melt viscosity.

For these reasons, there is a demand for a method of increasing efficiency and economic feasibility of a process and improving mechanical and surface characteristic of an article without using a process of coating or plating a plastic resin.

SUMMARY OF THE INVENTION

The scope of the invention is defined by the subject-matter of the independent claims. Preferred embodiments result from the sub-claims. The present invention provides a resin blend for a melting process. The resin blend can improve mechanical and surface characteristics of a resin article during a melting process such as extrusion or injection molding. Further, since coating or plating is not required for manufacturing a resin article, a manufacturing time and/or manufacturing cost can be reduced, and productivity can be increased.

The present invention further provides a pellet by using the resin blend for a melting process.

Further described herein is a method of preparing a resin article by using the resin blend for a melting process or the pellet.

According to the invention, a resin blend for a melting process includes a first resin; and a second resin having a difference in melt viscosity from the first resin of 1 to 1000 pa*s at a shear rate of 100 to 1000 s$^{-1}$ and a processing temperature of the resin blend.

According to the invention, a pellet includes a core including a first resin; and a shell including a second resin having a difference in melt viscosity from the first resin of 1 to 1000 pa*s at a shear rate of 100 to 1000 s$^{-1}$ and a processing temperature of the pellet.

Described herein is a method of preparing a resin article includes melting the resin blend to form a melt blend and processing the melt blend.

BRIEF DESCRIPTION OF THE DRAWINGS

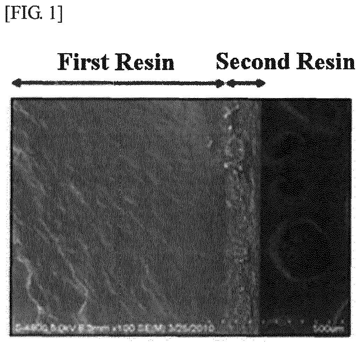

FIG. 1 is a SEM image illustrating a cross-sectional view of a layer-separated article prepared according to Example 1.

DETAILED DESCRIPTION OF EXEMPLARY EMBODIMENTS

Hereinafter, a resin blend for a melting process, on a pellet according to embodiments of the present invention as well as a method of preparing a resin article using the same will be described in detail.

In the present invention, a blend may be one in which a first resin and a second resin are uniformly blended in one matrix, or one in which a pellet composed of a first resin and a pellet composed of a second resin are uniformly blended. The one in which the resins are uniformly blended in one matrix indicates that first and second resins are uniformly blended in one pellet, and thus are present in a type of a composition.

A melting process or melt processing may indicate a process of melting a resin blend at a melting temperature (Tm) of the resin blend or higher to form a melt blend and forming a desired product by using the melt blend. For example, the melting process may include injection, extrusion, fiber spinning, foaming.

A layer separation or layer-separated may indicate that one layer substantially formed of one resin is disposed or aligned on another layer substantially formed of another resin. The layer substantially formed of one resin may indicate that one type of resin is continuously present in the entire layer, without forming a sea-island structure in the layer. The sea-island structure may indicate a phase-separated resin is partially distributed in an entire resin blend. Further, the "substantially formed" may indicate that one resin is present or one resin is rich in a layer. In the layer separation, two layers may be separated, or when necessary, three or more layers may be separated.

The inventors found that layer separation may be observed in a resin blend for a melting process including a first resin and a second resin when a first resin and a second resin having different physical properties are used, and a surface of a pellet or resin article is selectively coated using the layer separation without using an additional process during or after an extrusion or injection process, and thus completed the present invention. Particularly, since the second resin has a different physical property, such as a higher hydrophobicity, compared to the first resin, the layer separation may be easily performed in a melting process such as extrusion or injection, and the second resin may constitute a surface layer of a pellet to be molded or a resin article.

Accordingly, when the resin blend for a melting process is used, the resin article having excellent mechanical and surface characteristics may be obtained without using an additional coating process. Conventionally, to easily extract the resin article from a mold, a solvent having a low viscosity has simply been used. On the other hand, the resin blend for a melting process may enable layer separation of the resins using the molecular weight distribution of the second resin and the difference in physical properties between first and second resins, and improve surface and mechanical characteristics of the resin article.

The layer separation of the resin blend may be caused by a difference in physical properties between a first and second resins and/or a molecular weight distribution of the second resin. Here, the different physical properties may, for example, include surface energy, melt viscosity, a glass transition temperature and a solubility parameter.

In one embodiment, a resin blend for a melting process includes a first resin and a second resin having a difference in surface energy from the first resin at 25 °C of 0.1 to 35 mN/m.

The difference in surface energy between the first and second resins at 25 °C may be 0.1 to 35 mN/m, preferably 1 to 30 mN/m, and more preferably 1 to 20 mN/m. In the resin blend, after melting-process, the melt-processed the resin blend is exposed to an ambient air. At this time, the resin blend has mobility. Thus, the second resin may be positioned adjacent to the ambient air to form a surface layer of the resin article because the second resin having a smaller surface energy compared to the first resin may have a hydrophobic property, and move to contact with the ambient air. Accordingly, when the difference in surface energy is very small, the layer separation of the melt-processed resin blend does not easily occur because the second resin in a mixture of melting state is difficult to move through the polymer matrix of resin blend. Also, when the difference in surface energy is very large, the first and second resins may not be attached to each other, and thus may be detached.

In another embodiment, a resin blend for a melting process includes a first resin and a second resin having a difference in melt viscosity from the first resin of 1 to 1000 pa*s at a shear rate of 100 to 1000 s$^{-1}$ and a processing temperature of the resin blend.

The difference in a melt viscosity between the first resin and the second resin is 1 to 1000 pa*s at a shear rate of 100 to 1000 s$^{-1}$ and a processing temperature of the resin blend. When the difference in the melt viscosity is very small, the layer separation of the resin blend does not easily occur because the first resin is easily mixed with the second resin. When the difference in the melt viscosity is very large, the first and second resins may not be attached to each other, and thus may be detached.

The melt viscosity may be measured using a capillary flow meter, and indicates a shear viscosity (pa*s) at a predetermined processing temperature and shear rate (/s).

The shear rate is a shear rate applied when the resin blend is processed, and may be controlled according to a processing method.

The processing temperature is a temperature at which the resin blend is processed. For example, when the resin blend is subject to a process such as extrusion or injection, the processing temperature is a temperature at which the extrusion or injection is performed. The processing temperature may be controlled according to a resin subjected to extrusion or injection. A processing temperature for a resin blend including a first resin composed of an ABS resin and a second resin obtained by polymerizing a methyl methacrylate-based monomer is 210 to 240 °C.

In still another embodiment, a resin blend for a melting process includes a first resin and a second resin having a difference in solubility parameter from the first resin at 25 °C of 0.001 to 10.0 (J/cm$^3$)$^{1/2}$.

The difference in a solubility parameter between the first resin and the second resin at 25 °C may be 0.001 to 10.0 (J/cm$^3$)$^{1/2}$, preferably 0.01 to 5.0 (J/cm$^3$)$^{1/2}$, and more preferably 0.01 to 3.0 (J/cm$^3$)$^{1/2}$. A solubility parameter is an inherent characteristic of a resin showing soluble ability according to a polarity of each resin molecule, and the solubility parameter for each resin is generally known. When the difference in the solubility parameter is very small, the layer separation of the resin blend does not easily occur because the first resin is easily mixed with the second resin. When the difference in the solubility parameter is very large, the first and second resins may not be attached to each other, and thus may be detached.

A molecular weight distribution (PDI) of the second resin is 1 to 2.3.

When the molecular weight distribution of the second resin is greater than 2.5, the first resin is easily mixed with the second resin due to the low molecular weight portion of the second resin, or the mobility of the second resin in a mixture of melting state is degraded due to the high molecular weight portion thereof, the layer separation hardly occurs.

In the present invention, the weight average molecular weight (Mw) of the second resin of the resin blend for a melting process is 50,000 to 150,000.

When the weight average molecular weight is smaller than 30,000, the first resin is easily mixed with the second resin, and when the weight average molecular weight is greater than 200,000, the mobility of the second resin is degraded and thus the layer separation hardly occurs.

Meanwhile, the first resin mainly determines the physical properties of a desired resin article and may be selected according to a kind of the desired resin article and process conditions. As the first resin, a synthetic resin may be used without limitation, but may include a styrene-based resin such as an acrylonitrile butadiene styrene (ABS)-based resin (according to the invention), a polystyrene-based resin, an acrylonitrile styrene acrylate (ASA)-based resin or a styrenebutadiene-styrene block copolymer-based resin; a polyolefin-based resin such as a high density polyethylene-based resin, a low density polyethylene-based resin or a polypropylene-based resin; a thermoplastic elastomer such as an ester-based thermoplastic elastomer or olefin-based thermoplastic elastomer; a polyoxyalkylene-based resin such as a polyoxymethylene-based resin or a polyoxyethylene-based resin; a polyester-based resin such as a polyethylene terephthalate-based resin or a polybutylene terephthalate-based resin; a polyvinylchloride-based resin; a polycarbonate-based resin; a polyphenylenesulfide-based resin; a vinyl alcohol-based resin; a polyamide-based resin; an acrylate-based resin; an engineering plastic; or a copolymer or mixture thereof.

The second resin shows the difference in physical properties from the first resin as described above, and may be chosen to provide specific functions to a surface of a resin article. A kind of the functions is not particularly limited. For example, specific examples of the second resin may include an anti-wear resin, an anti-contamination resin, an anti-fingerprint resin, a colored resin, a pearl resin, a high-gloss resin, a non-gloss resin, a barrier resin or a mixture thereof.

The second resin may have either or all of a thermal curable functional group and a UV curable functional group. When a thermal curable functional group is included in the second resin, layer separation may occur and hardness may be increased due to the crosslinks formed in extrusion or injection.

More specific examples of the second resin include a (meth)acrylate-based resin (according to the invention), an epoxy-based resin, an oxetane-based resin, an isocyanate-based resin, a silicon-based resin, a fluorine-based resin, and a copolymer or mixture thereof.

The (meth)acrylate-based resin is a resin formed by polymerizing an acryl or methacryl monomer as a main component, which may include, but is not limited to, alkyl methacrylates such as methyl methacrylate, ethyl methacrylate, propyl methacrylate, butyl methacrylate, cyclohexyl methacrylate, octyl methacrylate, lauryl methacrylate or stearyl methacrylate; alkyl acrylates such as methyl acrylate, ethyl acrylate, propyl acrylate, butyl acrylate, octyl acrylate, lauryl acrylate or stearyl acrylate; or glycidyl (meth)acrylates such as glycidyl methacrylate (according to the invention) or glycidyl acrylate.

The epoxy-based resin is a resin containing an epoxy group, and may be, but is not limited to, a bisphenol type such as bisphenol A, bisphenol F, bisphenol S or a hydro additive thereof; a novolac type such as phenol novolac or cresol novolac; a nitrogen-containing ring type such as triglycidyl isocyanurate or hydantoin; an alicyclic type; an aliphatic type; an aromatic type such as naphthalene or biphenyl; a glycidyl type such as glycidyl ether, glycidyl amine or glycidyl ester; a dicyclo type such as dicyclopentadiene; an ester type; or an ether ester type.

The oxetane-based resin is an organic compound formed by polymerizing an oxetane monomer having at least one oxetane ring, and may be, but is not limited to, 1,4-bis[(3-ethyl-3-oxetanylmethoxy)methyl]benzene, di[1-ethyl(3-oxetanyl)]methylether, or a polyoxetane compound such as phenol novolac oxetane, terephthalate bisoxetane or biphenylene bisoxetane.

The isocyanate-based resin may be a resin containing an isocyanate group, and may be, but is not limited to, diphenylmethane diisocyanate (MDI), toluene diisocyanate (TDI) or isophorone diisocyanate (IPDI).

The silicon-based resin is resin containing a main chain connected by a siloxane bond which is a silicon-oxygen bond, and may be, but is not limited to, polydimethylsiloxane (PDMS).

The fluorine-based resin is resin containing a fluorine atom, and may be, but is not limited to, polytetrafluoroethylene (PTFE), polychlorotrifluoroethylene (PCTFE), polyvinylidene fluoride (PVDF), or polyvinylfluoride (PVF).

The resin blend for a melting process includes the second resin in an amount of 0.1 to 50 parts by weight, and preferably 1 to 20 parts by weight, based on 100 parts by weight of the first resin.

When the second resin is included in an amount smaller than 0.1 parts by weight based on 100 parts by weight of the first resin, the layer separation does not occur. When the second resin is included in an amount larger than 50 parts by weight, the manufacturing cost of the resin article is increased due to the high cost of the second resin.

The resin blend for a melting process may be prepared into a pellet. The pellet prepared using the resin blend may have a structure in which a first resin may be disposed in the middle thereof, and a second resin may be layer-separated from the first resin and disposed to surround the first resin and to form a shell of the pellet.

According to one exemplary embodiment of the present invention, a pellet including a core including a first resin and a shell including a second resin having a difference in surface energy from the first resin at 25 °C of 0.1 to 35 mN/m may be provided.

According to the present invention, a pellet including a core including a first resin and a shell including a second resin having a difference in melt viscosity from the first resin of 1 to 1000 pa*s at a shear rate of 100 to 1000 s$^{-1}$ and a processing temperature of the pellet.

According to another exemplary embodiment of the present invention, a pellet including a core including a first resin and a shell including a second resin having a difference in solubility parameter from the first resin at 25 °C of 0.001 to 10.0 (J/cm$^3$)$^{1/2}$ may be provided.

The first and second resins have already been described in detail, and thus further detailed description will be omitted.

Meanwhile, as described herein, a method of preparing a resin article including melting the resin blend for a melting process to form a melt blend; and processing the melt blend may be provided.

As described above, since the second resin has a different physical property, such as a higher hydrophobicity, compared to the first resin, the layer separation may occur during the extrusion or injection of the resin blend, and due to the layer separation, a surface of a pellet or resin article may be selectively coated without an additional process.

Furthermore, the melting process may be performed under a shear stress, and may include, but is not limited to, injection and extrusion.

The resin blend for a melting process may be prepared into a pellet by an extrusion. In addition, the resin blend may be prepared into a pellet by extrusion, and then processed into a resin article through a melting process such as injection. Alternatively, the resin blend may be directly prepared into a resin article by injection. According to kinds of the first and second resins used in the extrusion or injection of the resin blend, a temperature to be applied may be changed.

The method of preparing a resin article may further include curing a resulting product obtained by melting-processing the resin blend, that is, a melting-processed product obtained from the resin blend. After the process such as extrusion or injection, either or both of thermal curing and ultraviolet (UV) curing may be further performed. When necessary, chemical treatment may be performed after the process.

Meanwhile, the method of preparing a resin article may further include preparing a second resin before the extrusion or injection of the resin blend for a melting process. As examples for the preparation of the second resin, there is bulk polymerization, solution polymerization, suspension polymerization, or emulsion polymerization.

In the suspension polymerization method, the second resin may be prepared by dispersing a monomer in a reaction medium, adding and blending an additive such as a chain transfer agent, an initiator and a dispersion stabilizer in the reaction solvent and polymerizing the blend at 40°C or higher. The monomer is a monomer of at least one resin selected from the group consisting of an anti-wear resin, an anti-contamination resin, an anti-fingerprint resin, a colored resin, a pearl resin, a high-gloss resin, a non-gloss resin and a barrier resin.

Examples of the monomer of at least one resin selected from the group consisting of the anti-wear resin, the anti-contamination resin, the anti-fingerprint resin, the colored resin, the pearl resin, the high-gloss resin, the non-gloss resin and the barrier resin include a (meth)acrylate-based resin, an epoxy-based resin, an oxetane-based resin, an isocyanate-based resin, a silicon-based resin, a fluorine-based resin and a copolymer thereof.

The reaction medium may be any medium known to be conventionally used to prepare a synthetic resin, polymer or copolymer without limitation. An example of the reaction medium is distilled water.

The chain transfer agent which can be added to the reaction solvent may be, but is not limited to, an alkyl mercaptan such as n-butyl mercaptan, n-dodecyl mercaptan, tertiary dodecyl mercaptan or isopropyl mercaptan; aryl mercaptan; a halogen compound such as ketone tetrachloride; or an aromatic compound such as an alpha-methylstyrene dimer or an alpha-ethylstyrene dimer.

The initiator is a polymerization initiator, which may be, but is not limited to, a peroxide such as octanoyl peroxide, decanoyl peroxide or lauryl peroxide, or an azo-based compound such as azobisisobutyronitrile or azobis-(2,4-dimethyl)-valeronitrile.

The dispersion stabilizer which can be included in the reaction medium may be, but is not limited to, an organic distribution agent such as polyvinyl alcohol, polyolefin-maleic acid or cellulose or an inorganic distribution agent such as tricalcium phosphate.

The first and second resins have already been described above in detail, and thus further description thereof will be omitted.

The present invention will be described with reference to the following Examples in detail. However, the present invention is not limited to the following Examples.

**Experimental Example 1: Measurement of Surface Energy**

According to the Owens-Wendt-Rabel-Kaelble (OWRK) method, surface energies of second resins and first resins obtained from Examples 1 to 4 and Comparative Examples 3 to 7 and samples obtained from Comparative Examples 1 and 2 were measured using a drop shape analyzer (Kruss, DSA100).

More specifically, the second resin, the first resin or the sample was dissolved in a methyl ethyl ketone solvent to have a concentration of 15 wt%, and then coated on an LCD glass by bar coating. The coated LCD glass was pre-dried in an oven at 60 °C for 2 minutes and then dried at 90 °C for 1 minute.

After drying (or curing), deionized water and diiodomethane were dropped 10 times on the coated surface at 25 °C, respectively, to get an average value of a contact angle, and surface energy was calculated by substituting a numerical value into the OWRK method.

**Experimental Example 2: Measurement of Melt Viscosity**

Melt viscosities of the second resins obtained from Examples 1 to 4 and Comparative Examples 3 to 7, the first resins obtained from Examples and the samples obtained from Comparative Examples 1 and 2 were measured using a capillary rheometer 1501 (Gottfert).

More specifically, after a capillary die was attached to a barrel, the second resin, the first resin or the sample was put into the barrel by dividing to 3 parts. A shear viscosity (pa*s) according to a shear rate of 100 to 1000 $s^{-1}$ was measured at a processing temperature of 240 °C.

**Experimental Example 3: Measurement of Solubility Parameter**

While there are some methods of measuring and calculating a solubility parameter, in the following Examples and Comparative Examples, the solubility parameter was calculated at 25 °C using a known method, the Van Krevelen method [refer to Bicerano, J., Prediction of Polymer Properties, third edition, Marcel Dekker Inc., New York (2002)]. According to the Van Krevelen method, the solubility parameter was calculated using a group contribution theory, and defined as the following formula:

$$\delta \text{ (solubility parameter)} = \sqrt{e_{coh}} = \sqrt{\frac{E_{coh}}{V}}$$

In the formula, $E_{coh}$ is a cohesive energy, V is a molar volume, and $e_{coh}$ is a cohesive energy density. The cohesive energy ($E_{coh}$) is defined as follows:

$$E_{cal} = 10570.9 \times (^0\chi' - {}^0\chi) + 9072.8 \times (2x^1\chi - {}^1\chi') + 1018.2 \times N_{VKH}$$

In the formula, $^0X$, $^1X$, $^0X^v$ and $^1X^v$ are connectivity indices, and $N_{VKH}$ is a correlation term. Each variant was calculated with reference to the disclosed literature [Bicerano, J., Prediction of Polymer Properties, third edition, Marcel Dekker Inc., New York (2002)].

## Experimental Example 4: Observation of Feature of Cross-section

The samples prepared in Examples and Comparative Examples went through a low temperature impact test. Then, fracture surfaces of the samples were etched using THF vapor, and a layer-separated cross-section was observed using an SEM. The feature of the cross-section observed is shown in FIG. 1.

## Experimental Example 5: Experiment for Measuring Pencil Hardness

Pencil hardnesses of the samples in Examples and Comparative Examples were measured under a constant load of 500 g using a pencil hardness tester (Chungbuk Tech). Scratches were made on a surface of the samples by standard pencils (Mitsubishi; grade 6B to 9H) with a fixed angle of 45 degrees, and therefore a change rate of the surface was observed (ASTM 3363). The values of pencil hardness are average values of the results obtained from tests performed 5 times.

## Experimental Example 6: Measurement of Molecular Weight Distribution (PDI)

Molecular weight distribution was measured using gel permeation chromatography (GPC) under conditions as follows:

Instrument: 1200 series produced by Agilent Technologies
Column: 2 PLgel mixed Bs produced by Polymer Laboratories
Solvent: THF
Column Temperature: 40 °C
Concentration of Sample: 1 mg/mL, 100 L injection
Standard: Polystyrene (Mp: 3900000, 723000, 316500, 52200, 31400, 7200, 3940 or 485)

As an analysis program, ChemStataion provided by Agilent Technologies was used, and a weight average molecular weight (Mw) and a number average molecular weight (Mn) were measured using gel permeation chromatography (GPC), and the molecular weight distribution was then calculated from an equation of Mw/Mn.

## Example 1

(1) Preparation of Second Resin

1500 g of distilled water and 4 g of 2% polyvinylalcohol aqueous solution as a dispersing agent were put into a 3-liter reactor and dissolved. Subsequently, 560 g of methyl methacrylate, 240 g of glycidyl methacrylate, 2.4 g of n-dodecyl mercaptan as a chain transfer agent and 2.4 g of azobisisobutyronitrile as an initiator were further added thereto, and mixed while stirring at 400 rpm. The mixture was polymerized by 3-hour reaction at 60 °C, and cooled to 30 °C, thereby obtaining a bead-type second resin-1. Afterward, the second resin-1 was washed three times with distilled water, dehydrated and dried in an oven.

(2) Preparation of Resin Blend and Resin Article Using the Same

After 90 parts by weight of a first resin-1 (a thermoplastic resin composed of 60 wt% methyl methacrylate, 7 wt% acrylonitrile, 10 wt% butadiene and 23 wt% styrene) was blended with 10 parts by weight of the second resin-1, the blend was extruded using a twin-screw extruder (Leistritz) at 240 °C, thereby obtaining a pellet. Then, the pellet was injected using an EC100Φ30 injector (ENGEL) at 240 °C, thereby obtaining a sample 1.

(3) Measurement of Physical Properties of Sample

As the results of measurement of the physical properties of the first resin-1 and the second resin-2, it was shown that a difference in surface energy was 6.4 mN/m, a difference in melt viscosity was 180 pa*s, a difference in solubility parameter was 0.5 $(J/cm^3)^{1/2}$, a weight average molecular weight of the second resin obtained by GPC was 100K, and a molecular weight distribution of the second resin was 2.1. In addition, a pencil hardness of the sample 1 was 2H, and layer separation occurred.

## Example 2

(1) Preparation of Second Resin

1500 g of distilled water and 4 g of 2% polyvinylalcohol aqueous solution as a dispersing agent were put into a 3-liter reactor and dissolved. Subsequently, 760 g of methyl methacrylate, 40 g of perfluorohexylethyl methacrylate, 2.4 g of n-dodecyl mercaptan as a chain transfer agent and 2.4 g of azobisisobutyronitrile as an initiator were further added thereto, and mixed while stirring at 400 rpm. The mixture was polymerized by 3-hour reaction at 60 °C, and cooled to 30 °C, thereby obtaining a bead-type second resin-2. Afterward, the second resin-2 was washed three times with distilled water, dehydrated and dried in an oven.

(2) Preparation of Resin Blend and Resin Article Using the Same

A sample 2 was prepared by the same method as Example 1, except that 10 parts by weight of the second resin-2 was used instead of 10 parts by weight of the second resin-1.

(3) Measurement of Physical Properties of Sample

As the results of measurement of the physical properties of the first resin-1 and the second resin-2, it was shown that a difference in surface energy was 4.2 mN/m, a difference in melt viscosity was 250 pa*s, a difference in solubility parameter was 0.2 $(J/cm^3)^{1/2}$, a weight average molecular weight of the second resin obtained by GPC was 100K, and a molecular weight distribution of the second resin was 2.0. In addition, a pencil hardness of the sample 2 was 2H, and layer separation occurred.

## Example 3

(1) Preparation of Second Resin

A second resin-3 was prepared by the same method as described in Example 1, except that 560 g of methyl methacrylate and 240 g of tertiary butyl methacrylate, 2.4 g of n-dodecyl mercaptan as a chain transfer agent and 3.2 g of azobisisobutyronitrile as an initiator were put into the reactor.

(2) Preparation of Resin Blend and Resin Article Using the Same

A sample 3 was prepared by the same method as Example 1, except that 10 parts by weight of the second resin-3 was used instead of 10 parts by weight of the second resin-1.

(3) Measurement of Physical Properties of Sample

As the results of measurement of the physical properties of the first resin-1 and the second resin-3, it was shown that a difference in surface energy was 1.1 mN/m, a difference in melt viscosity was 360 pa*s, a difference in solubility parameter was 0.7 $(J/cm^3)^{1/2}$, a weight average molecular weight of the second resin obtained by GPC was 80K, and a molecular weight distribution of the second resin was 1.9. In addition, a pencil hardness of the sample 3 was 2H, and layer separation occurred.

## Example 4

(1) Preparation of Second Resin

The second resin-1 of Example 1 was used.

(2) Preparation of Resin Blend and Resin Article Using the Same

A sample 4 was prepared by the same method as described in Example 1, except that 90 parts by weight of a first resin-2 (a thermoplastic resin composed of 21 wt% of acrylonitrile, 15 wt% of butadiene and 64 wt% of styrene) were used instead of 90 parts by weight of the first resin-1.

(3) Measurement of Physical Properties of Sample

As the results of measurement of the physical properties of the first resin-2 and the second resin-1, it was shown that a difference in surface energy was 6.1 mN/m, a difference in melt viscosity was 120 pa*s, a difference in solubility parameter was 0.7 $(J/cm^3)^{1/2}$, a weight average molecular weight of the second resin obtained by GPC was 100K, and a molecular weight distribution of the second resin was 2.1. In addition, a pencil hardness of the sample 4 was HB, and layer separation occurred.

**Comparative Example 1**

Comparative Example 1 was prepared with only the first resin-1 of Example 1. Particularly, 100 parts by weight of the first resin-1 were extruded using a twin-screw extruder (Leistritz) at 240 °C, thereby obtaining a pellet. Then, the pellet was injected using an EC100Φ30 injector (ENGEL) at 240 °C, thereby obtaining a sample 5.
As the results obtained by measuring physical properties of the sample 5, a pencil hardness was F, and layer separation was not observed.

**Comparative Example 2**

100 parts by weight of the first resin-2 were extruded using a twin-screw extruder (Leistritz) at 240 °C, thereby obtaining a pellet. Then, the pellet was injected using an EC100Φ30 injector (ENGEL) at 240 °C, thereby obtaining a sample 6.
As the results obtained by measuring physical properties of the sample 6, a pencil hardness was 2B, and layer separation was not observed.

**Comparative Example 3**

(1) Preparation of Second Resin

1500 g of distilled water and 4 g of 2% polyvinylalcohol aqueous solution as a dispersing agent were put into a 3-liter reactor and dissolved. Subsequently, 40 g of methyl methacrylate, 760 g of perfluorohexylethyl methacrylate, 2.4 g of n-dodecyl mercaptan as a chain transfer agent and 2.4 g of azobisisobutyronitrile as an initiator were further added thereto, and mixed while stirring at 400 rpm. The mixture was polymerized by 3-hour reaction at 60 °C, and cooled to 30 °C, thereby obtaining a bead-type second resin-4. Afterward, the second resin-4 was washed three times with distilled water, dehydrated and dried in an oven.

(2) Preparation of Resin Blend and Resin Article Using the Same

A sample 7 was prepared by the same method as described in Example 1, except that 10 parts by weight of a second resin-4 were used instead of 10 parts by weight of the second resin-1.

(3) Measurement of Physical Properties of Sample

As the results of measurement of the physical properties of the first resin-1 and the second resin-4, it was shown that a difference in surface energy was 37 mN/m, a difference in melt viscosity was 375 pa*s, a difference in solubility parameter was 3.5 $(J/cm^3)^{1/2}$, a weight average molecular weight of the second resin measured by GPC was 100K, and a molecular weight distribution of the second resin was 2.1. In addition, detachment between the first resin and the second resin in the sample 7 occurred, and thus a pencil hardness was not measured.

**Comparative Example 4**

(1) Preparation of Second Resin

A second resin-5 was prepared by the same method as described in Example 1, except that 0.8 g of n-dodecyl mercaptan and 1.6 g of azobisisobutyronitrile were used instead of 2.4 g of n-dodecyl mercaptan and 2.4 g of azobisisobutyronitrile.

(2) Preparation of Resin Blend and Resin Article Using the Same

A sample 8 having a thickness of 3200 $\mu$m was prepared by the same method as Example 1, except that 10 parts by weight of the second resin-5 were used instead of 10 parts by weight of the second resin-1.

(3) Measurement of Physical Properties of Sample

As the results of measurement of the physical properties of the first resin-1 and the second resin-5, it was shown that a difference in surface energy was 6.3 mN/m, a difference in melt viscosity was 1090 pa*s, a difference in solubility parameter was 0.5 $(J/cm^3)^{1/2}$, a weight average molecular weight of the second resin obtained by GPC was 205K, and a molecular weight distribution of the second resin was 3.3. In addition, a pencil hardness of the sample 8 was H, layer separation was partially observed, and a thickness of separated layer was non-uniform in parts.

**Comparative Example 5**

(1) Preparation of Second Resin

A second resin-6 was prepared by the same method as described in Example 3, except that 4.8 g of n-dodecyl mercaptan and 2.4 g of azobisisobutyronitrile were used instead of 2.4 g of n-dodecyl mercaptan and 3.2 g of azobisisobutyronitrile.

(2) Preparation of Resin Blend and Resin Article Using the Same

A sample 9 having a thickness of 3200 $\mu$m was prepared by the same method as described in Example 3, except that 10 parts by weight of a second resin-6 were used instead of 10 parts by weight of the second resin-3.

(3) Measurement of Physical Properties of Sample

As the results of measurement of the physical properties of the first resin-1 and second resin-6, it was shown that a difference in surface energy was 1 mN/m, a difference in melt viscosity was 610 pa*s, a difference in solubility parameter was 0.7 $(J/cm^3)^{1/2}$, a weight average molecular weight of the second resin was 42K, and a molecular weight distribution of the second resin was 3.2. In addition, a pencil hardness of the sample 9 was F, and layer separation was not observed.

**Comparative Example 6**

(1) Preparation of Second Resin

A second resin-7 was prepared by the same method as described in Example 3, except that 0.5 g of n-dodecyl mercaptan and 1.6 g of azobisisobutyronitrile were used instead of 2.4 g of n-dodecyl mercaptan and 3.2 g of azobisisobutyronitrile.

(2) Preparation of Resin Blend and Resin Article Using the Same

A sample 10 having a thickness of 3200 $\mu$m was prepared by the same method as described in Example 3, except that 10 parts by weight of the second resin-7 were used instead of 10 parts by weight of the second resin-3.

(3) Measurement of Physical Properties of Sample

As the results of measurement of the physical properties of the first resin-1 and the second resin-7, it was shown that a difference in surface energy was 1 mN/m, a difference in melt viscosity was 1390 pa*s, a difference in solubility parameter was 0.7 $(J/cm^3)^{1/2}$, a weight average molecular weight of the second resin was 245K, and a molecular weight distribution of the second resin was 5.3. In addition, a pencil hardness of the sample 10 was F, and layer separation was not observed.

**Comparative Example 7**

(1) Preparation of Second Resin

A second resin-8 was prepared by the same method as described in Example 3, except that 0.4 g of n-dodecyl mercaptan and 1.1 g of azobisisobutyronitrile were used instead of 2.4 g of n-dodecyl mercaptan and 3.2 g of azobisisobutyronitrile.

(2) Preparation of Resin Blend and Resin Article Using the Same

A sample 11 having a thickness of 3200 $\mu$m was prepared by the same method as described in Example 3, except that 10 parts by weight of the second resin-8 were used instead of 10 parts by weight of the second resin-3.

(3) Measurement of Physical Properties of Sample

As the results of measurement of the physical properties of the first resin-1 and the second resin-8, it was shown that a difference in surface energy was 1 mN/m, a difference in melt viscosity was 2200 pa*s, a difference in solubility parameter was 0.7 $(J/cm^3)^{1/2}$, a weight average molecular weight of the second resin was 320K, and a molecular weight distribution of the second resin was 5.2. In addition, a pencil hardness of the sample 11 was F, and layer separation was not observed.

As shown in Examples and Comparative Examples, the layer separation was observed in Examples 1 to 4 using the first resin and second resin having the described differences value in surface energy, melt viscosity or solubility parameter. It was further observed that the resin article prepared according to the Examples 1 to 4 had a layer formed of the first resin, an interface layer and a layer formed of the second resin.

As the second resin layer was formed on a surface of the resin article, the resin article had an improved surface characteristic. Specifically, it was confirmed that Examples 1 to 4 using the second resin polymerized from a methyl methacrylate-based monomer could exhibit an excellent anti-scratch characteristic due to a high pencil hardness of HB or more.

On the other hand, the resin molded articles prepared using only the first resin (of Comparative Examples 1 and 2) did not have separated layers and had low surface pencil hardness. Accordingly, to use the resin article obtained in Comparative Examples 1 and 2 for a part of an automobile or a part of an electric device, a coating process was needed to improve a surface characteristic.

Meanwhile, when the difference in surface energy between the second resin layer and the first resin layer was greater than 35 mN/m (in Comparative Example 3), the first resin was not attached to the second resin and both resins were detached from each other. Therefore, it was understood that layer separation occurred in the resin article only when the first resin and the second resin had a certain difference in surface energy (at 25 °C) like Examples 1 to 4.

In addition, it was understood from Comparative Examples 4 to 7 that the layer separation was observed only when the second resin had weight average molecular weight and molecular weight distribution as described above.

According to the present invention, a resin blend for a melting process, a pellet and a method of preparing a resin article using the same can be provided. The resin blend can improve mechanical and surface characteristics of a resin article. Further, since additional coating is not required for manufacturing a resin article, a manufacturing time and/or cost can be reduced, and productivity can be increased.

**Claims**

1. A resin blend for a melting process under shear stress, comprising:

    a first resin including an ABS resin; and
    a second resin including a (meth)acrylate-based resin,

    wherein the second resin has a difference in melt viscosity from the first resin of 1 to 1000 pa*s at a shear rate of 100 to 1000 $s^{-1}$ and 210 to 240 °C, a molecular weight distribution of 1 to 2.3, and a weight average molecular weight of 50,000 to 150,000, and
wherein a content of the second resin is 0.1 to 50 parts by weight based on 100 parts by weight of the first resin,
wherein the (meth)acrylate-based resin includes at least one selected from the group consisting of glycidyl methacrylate, perfluorohexylethyl methacrylate and tertiary butyl methacrylate in a polymerized form.

2. A pellet, comprising:

   a core including a first resin including an ABS resin; and
   a shell including a second resin including a (meth)acrylate-based resin.

   wherein the second resin has a difference in melt viscosity from the first resin of 1 to 1000 pa*s at a shear rate of
   100 to 1000 s$^{-1}$ and 210 to 240 °C, a molecular weight distribution of 1 to 2.3, and a weight average molecular weight
   of 50,000 to 150,000, and
   wherein a content of the second resin is 0.1 to 50 parts by weight based on 100 parts by weight of the first resin,
   wherein the (meth)acrylate-based resin includes at least one selected from the group consisting of glycidyl methacrylate, perfluorohexylethyl methacrylate and tertiary butyl methacrylate in a polymerized form.

## Patentansprüche

1. Harzzusammensetzung für einen Schmelzprozess unter Scherkräften, umfassend:

   ein erstes Harz, das ein ABS-Harz umfasst; und
   ein zweites Harz, das ein (Meth)acrylat-basiertes Harz umfasst,

   wobei das zweite Harz sich hinsichtlich der Schmelzviskosität von der des ersten Harzes um 1 bis 1.000 Pa*s, bei
   einer Scherrate von 100 bis 1.000 s$^{-1}$ und 210 bis 240°C, unterscheidet, eine Molekulargewichtsverteilung von 1
   bis 2,3 hat und ein Gewichtsmittel des Molekulargewichts von 50.000 bis 150.000 hat, und
   wobei ein Gehalt des zweiten Harzes von 0,1 bis 50 Gewichtsteilen, bezogen auf 100 Gewichtsteile des ersten
   Harzes, ist,
   wobei das (Meth)acrylat-basierte Harz zumindest eines umfasst, das ausgewählt ist aus der Gruppe, bestehend
   aus Glycidylmethacrylat, Perfluorhexylethylmethacrylat und tert-Butylmethacrylat in einer polymerisierten Form.

2. Pellet, umfassend:

   einen Kern, der ein erstes Harz umfasst, das ein ABS-Harz umfasst; und
   eine Hülle, die ein zweites Harz umfasst, das ein (Meth)acrylat-basiertes Harz umfasst,

   wobei das zweite Harz sich hinsichtlich der Schmelzviskosität von der des ersten Harzes um 1 bis 1.000 Pa*s, bei
   einer Scherrate von 100 bis 1.000 s$^{-1}$ und 210 bis 240°C, unterscheidet, eine Molekulargewichtsverteilung von 1
   bis 2,3 hat und ein Gewichtsmittel des Molekulargewichts von 50.000 bis 150.000 hat, und
   wobei ein Gehalt des zweiten Harzes 0,1 bis 50 Gewichtsteile, bezogen auf 100 Gewichtsteile des ersten Harzes, ist,
   wobei das (Meth)acrylat-basierte Harz zumindest eines umfasst, das ausgewählt ist aus der Gruppe, bestehend
   aus Glycidylmethacrylat, Perfluorhexylethylmethacrylat und tert-Butylmethacrylat in einer polymerisierten Form.

## Revendications

1. Un mélange de résines destiné à être transformé à l'état fondu sous contrainte de cisaillement, comprenant :

   une première résine incluant une résine ABS ; et
   une seconde résine incluant une résine à base de (méth)acrylate,

   dans lequel la seconde résine a une différence de viscosité à l'état fondu par rapport à la première résine comprise
   entre 0,1 et 1000 pa*s à un taux de cisaillement compris entre 100 et 1000 s$^{-1}$ et à entre 210 et 240°C, une distribution
   de poids moléculaire comprise entre 1 et 2,3 et un poids moléculaire moyen en poids compris entre 50 000 to 150
   000, et
   dans lequel la teneur en seconde résine est comprise entre 0,1 et 50 parties en poids sur la base de 100 parties en poids de la première résine,

dans lequel la résine à base de (méth)acrylate inclut un ou plusieurs éléments sélectionnés dans le groupe constitué par le méthacrylate de glycidyle, le méthacrylate de perfluorohexyl-éthyle et le méthacrylate de butyle tertiaire sous une forme polymérisée.

2. Une pastille comprenant :

un noyau incluant une première résine incluant une résine ABS ; et
une enveloppe incluant une seconde résine incluant une résine à base de (méth)acrylate,

dans laquelle la seconde résine a une différence de viscosité à l'état fondu par rapport à la première résine comprise entre 0,1 et 1000 pa*s à un taux de cisaillement compris entre 100 et 1000 s$^{-1}$ et à entre 210 et 240°C, une distribution de poids moléculaire comprise entre 1 et 2,3 et un poids moléculaire moyen en poids compris entre 50 000 to 150 000, et

dans laquelle la teneur en seconde résine est comprise entre 0,1 et 50 parties en poids sur la base de 100 parties en poids de la première résine,

dans laquelle la résine à base de (méth)acrylate inclut un ou plusieurs éléments sélectionnés dans le groupe constitué par le méthacrylate de glycidyle, le méthacrylate de perfluorohexyl-éthyle et le méthacrylate de butyle tertiaire sous une forme polymérisée.

[FIG. 1]

First Resin     Second Resin

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20100050639
- KR 20100081084
- KR 20110033146
- JP 2004204122 A

**Non-patent literature cited in the description**

- **BICERANO, J.** Prediction of Polymer Properties. Marcel Dekker Inc, 2002